(19) Europäisches Patentamt
European Patent Office
Office européen des brevets

(11) EP 2 208 671 A1

(12) DEMANDE DE BREVET EUROPEEN

(43) Date de publication:
**21.07.2010 Bulletin 2010/29**

(51) Int Cl.:
***B64C 25/50*** ^(2006.01) ***G05B 13/04*** ^(2006.01)

(21) Numéro de dépôt: **10150921.4**

(22) Date de dépôt: **18.01.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **16.01.2009 FR 0900190**

(71) Demandeurs:
- **MESSIER BUGATTI**
  **78140 Velizy Villacoublay (FR)**
- **UNIVERSITE DE HAUTE ALSACE**
  **F-68200 Mulhouse Cédex (FR)**

(72) Inventeurs:
- **Levy, Paul-Louis**
  **75012 Paris (FR)**
- **Basset, Michel**
  **68990 Heimsbrunn (FR)**
- **Pouly, Gaétan**
  **92700 Colombes (FR)**
- **Lauffenbruger, Jean-Philippe**
  **68170 Rixheim (FR)**

(74) Mandataire: **Parzy, Benjamin Alain**
**Cabinet Boettcher**
**22, rue du Général Foy**
**75008 Paris (FR)**

# (54) Procédé de gestion de la commande d'orientation d'un atterrisseur d'aéronef

(57) L'invention concerne un procédé de gestion d'une commande d'orientation d'une partie orientable d'un atterrisseur d'aéronef, comportant la mise en oeuvre d'un asservissement pour asservir un actionneur électromécanique d'orientation à une consigne de position angulaire, dans lequel, selon l'invention, l'asservissement met en oeuvre une loi de commande de type H , les informations de position (θ) et de vitesse (ω) étant remontées vers un calculateur mettant en oeuvre l'asservissement au moyen d'un bus de terrain de type déterministe.

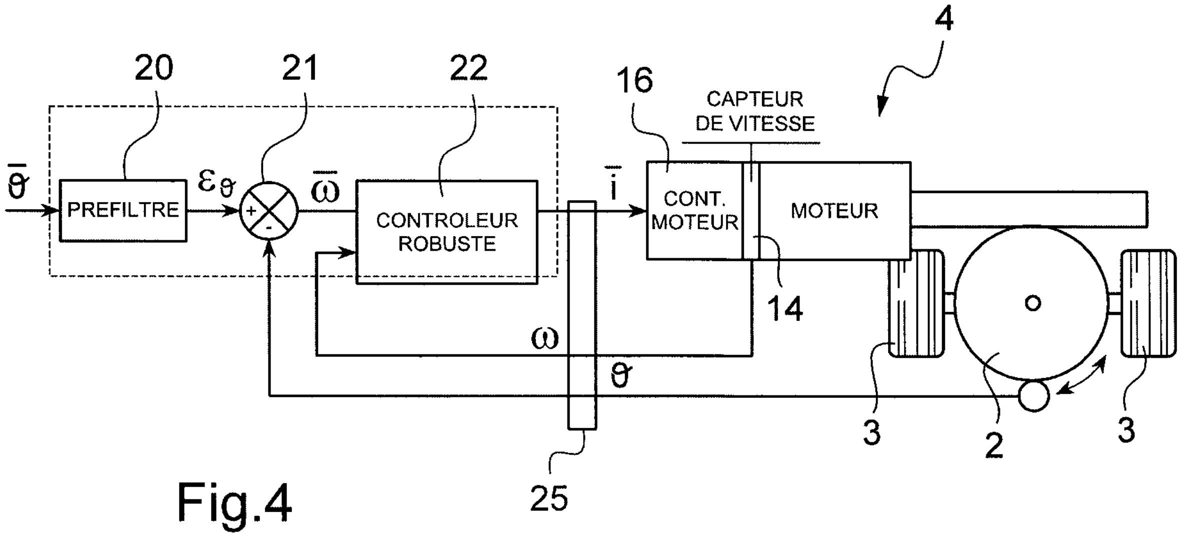


Fig.4

EP 2 208 671 A1

## Description

L'invention est relative à un procédé de gestion de la commande d'orientation d'un atterrisseur d'aéronef.

ARRIERE-PLAN TECHNOLOGIQUE DE L'INVENTION

On connaît des atterrisseurs auxiliaires d'aéronef comportant une partie inférieure orientable qui porte les roues de l'atterrisseurs. La partie inférieure est orientée par un actionneur d'orientation comportant au moins un actionneur moteur, par exemple un vérin hydraulique ou un moteur électrique adapté à faire pivoter la partie inférieure orientable en réponse à un ordre d'orientation délivré par le pilote, ou un calculateur de l'aéronef, en l'occurrence une position angulaire.

Dans le cas particulier des actionneurs d'orientation électromécaniques, il est connu de commander le moteur de l'actionneur d'orientation à l'aide d'un asservissement à double boucle de rétroaction, en l'occurrence une boucle externe en position et une boucle interne en vitesse. Cet asservissement fait de manière classique appel à un contrôleur PID, qui délivre en sortie un courant de consigne pour moteur de l'actionneur électromécanique. De façon classique également, le moteur est associé à un contrôleur qui asservit le moteur au courant de consigne reçu du contrôleur PID.

Des signaux de position et de vitesse sont remontés vers le calculateur qui met en oeuvre l'asservissement en position, le plus souvent par des liaisons filaires. Cependant, il est de plus en plus envisagé d'utiliser un bus de communication qui descendrait le long de l'atterrisseur pour relier le calculateur, en général disposé dans la cellule de l'aéronef, aux divers actionneurs et capteurs disposés sur l'atterrisseur, et ainsi collecter et distribuer les données et ordres nécessaires à la mise en oeuvre de la commande d'orientation.

En particulier, il est envisagé d'utiliser des bus de terrain déterministes du type à accès multiple à répartition dans le temps, par exemple des bus TTP. Or ces bus présentent des pas d'échantillonnage de l'ordre de quelques millisecondes, qui conduisent à des instabilités lorsqu'ils sont utilisés en conjonction avec des contrôleurs PID pour la commande d'orientation. Il semble que l'instabilité soit liée à la lenteur de l'information de vitesse.

Une réponse immédiate consisterait à rapprocher le calculateur de l'actionneur pour permettre l'implémentation d'une boucle de rétroaction interne en vitesse filaire, ne souffrant pas de la lenteur de communication du bus déterministe. Cependant, le calculateur serait alors situé dans une zone exposée, soumise à de fortes contraintes (intempéries, projections, vibrations), qui nécessiteraient la mise en oeuvre d'une protection importante.

OBJET DE L'INVENTION

L'objet de l'invention est permettre une commande stable de la commande d'orientation d'un atterrisseur à actionneur d'orientation électromécanique dans laquelle les signaux et les ordres transitent par un bus de communication relativement lent.

BREVE DESCRIPTION DE L'INVENTION

En vue de la réalisation de ce but, on propose un procédé de gestion d'une commande d'orientation d'une partie orientable d'un atterrisseur d'aéronef, comportant la mise en oeuvre d'un asservissement pour asservir un actionneur électromécanique d'orientation à une consigne de position angulaire, dans lequel, selon l'invention, l'asservissement met en oeuvre une loi de commande de type H , des informations de position et de vitesse nécessaires à la mise en oeuvre de l'asservissement étant remontées vers un calculateur assurant cette mise en oeuvre au moyen d'un bus de terrain de type déterministe.

L'invention a également pour objet un asservissement comportant un préfiltrage de la consigne de position angulaire visant à lisser celle-ci avant d'être comparée à l'information de position.

L'invention a encore pour objet un préfiltrage effectué au moyen d'un interpolateur discret de fonction de transfert.

Les inventeurs ont constaté que la mise en oeuvre d'une telle loi de commande en conjonction avec un bus déterministe pour la remontée des informations de vitesse et de position aboutissait à un asservissement stable. En outre, une telle commande permet de loger l'asservissement dans un calculateur éloigné de l'actionneur commandé, tout en permettant une boucle de rétroaction en vitesse.

Ainsi, l'actionneur et son contrôleur peuvent être développés indépendamment du calculateur et de l'asservissement associé.

BREVE DESCRIPTION DES FIGURES

L'invention sera mieux comprise à la lumière de la description qui suit d'un mode de mise en oeuvre particulier de l'invention, en référence aux figures des dessins annexés parmi lesquelles :

- la figure 1 est une vue schématique d'un atterrisseur auxiliaire d'aéronef muni d'un actionneur d'orientation électromécanique ;
- la figure 2 est un schéma-bloc d'une commande d'orientation selon un asservissement connu, à base de contrôleurs PID ;
- la figure 3 est un diagramme d'une réponse temporelle d'un asservissement selon la figure 2 à un échelon de vitesse, lors de l'utilisation d'un bus déterministe ;

- la figure 4 est un schéma-bloc de la commande d'orientation selon un mode particulier de mise en oeuvre de l'invention ;
- la figure 5 est un diagramme d'une réponse temporelle d'un asservissement selon la figure 4 au même échelon de vitesse, avec utilisation d'un bus déterministe ;
- la figure 6 est un schéma-bloc illustrant le principe de réglage du contrôleur H utilisé dans la commande d'orientation de la figure 4.

En référence à la figure 1, et de façon connue en soi, l'atterrisseur 1 est équipé d'une partie inférieure 2 orientable portant des roues 3. Un actionneur électromécanique d'orientation 4 permet de faire pivoter un tube tournant 5 qui est relié à la partie inférieure orientable 2 par un compas 6. Ainsi, un pivotement du tube tournant provoqué par l'actionneur électromécanique 4 provoque un pivotement correspondant de la partie inférieure orientable 2, et donc des roues 3, permettant ainsi l'orientation de l'aéronef.

Toujours de façon connue en soi, l'actionneur électromécanique comporte un moteur qui est généralement commandé comme illustré à la figure 2. Une consigne de position angulaire $\theta$ est envoyée à un comparateur 10 qui reçoit également un signal de position angulaire de la partie inférieure orientable, provenant d'un capteur de rotation 11. Le comparateur 10 génère un signal d'erreur de position $\varepsilon_\theta$ qui est fourni à un premier contrôleur PID 12. Celui-ci génère une consigne de vitesse de rotation $\omega$ du moteur électrique équipant l'actionneur électromécanique 4. La consigne de vitesse de rotation $\omega$ est fournie à un comparateur 13 qui reçoit également un signal de vitesse de rotation du moteur, provenant d'un capteur de vitesse de rotation 14 installé sur le moteur de l'actionneur. Le comparateur 13 génère un signal d'erreur de vitesse $\varepsilon_\theta$ qui est fourni à un deuxième contrôleur PID 15. Celui-ci génère une consigne de courant $\bar{i}$ qui est fournie à un contrôleur 16, qui se charge de contrôler le moteur de sorte que le courant circulant dans le moteur soit égal à la consigne de courant $\bar{i}$.

Dans les mises en oeuvre connues, les signaux de position et de vitesse, ainsi que la consigne de courant i, sont transmises via des liaisons filaires entre le calculateur qui implémente le contrôle PID, représenté symboliquement sur la figure par le rectangle en traits pointillés, et les organes concernés, tels que les capteurs de vitesse et de position, ou le contrôleur du moteur.

Le remplacement de ces liaisons filaires par un bus de terrain de type déterministe soulève un certain nombre de problèmes. En effet, dans les applications aéronautiques envisagées, il est probable que le pas d'échantillonnage d'un tel réseau soit de l'ordre de 5 millisecondes. Or des simulations réalisées avec un tel pas d'échantillonnage font apparaître une instabilité, qui semble essentiellement être due au pas d'échantillonnage du signal de vitesse, trop grand.

A la figure 3 est présentée la réponse à un échelon de vitesse d'une commande d'orientation asservi au moyen de l'asservissement présenté à la figure 2. Celui-ci a été réglé selon la méthode classique de Ziegler-Nichols. On constate que non seulement la réponse sort du gabarit spécifié (courbes en traits pleins), mais qu'en plus elle présente des vibrations dommageables pour la structure de l'atterrisseur.

Une première modification envisagée par les inventeurs est de ne plus faire passer le signal de vitesse par le bus de terrain, mais de prévoir une liaison filaire spécifique entre le calculateur et le capteur de vitesse de rotation. Cette modification semble régler le problème rencontré, mais complique bien entendu l'architecture de la commande d'orientation, en nécessitant la mise en place d'une liaison filaire parallèle au bus de terrain.

Une deuxième modification envisagée par les inventeurs a été de scinder l'asservissement pour loger la boucle de vitesse directement dans le contrôleur du moteur. Ainsi, la boucle de vitesse devient une boucle cachée pour le calculateur, le signal de vitesse n'étant pas remonté jusqu'à ce dernier par le bus de terrain. Ainsi, le calculateur fournit une consigne de vitesse au contrôleur du moteur, qui bien sûr devient beaucoup plus complexe. En outre, ce dernier, logé en général au plus près du moteur, doit maintenant comporter l'électronique nécessaire à la mise en oeuvre de cette boucle de vitesse. Cette disposition n'est donc pas non plus satisfaisante.

L'invention vise à proposer une autre solution illustrée à la figure 4, dans laquelle on garde l'ensemble de l'asservissement dans un calculateur séparé. Celui-ci fournit toujours une consigne de courant au contrôleur du moteur. Mais il comporte maintenant un préfiltre 20 filtrant la consigne de position $\theta$. Le préfiltre sert à lisser la consigne de position, et met en oeuvre de préférence un interpolateur discret de fonction de transfert :

$$F(z) = \frac{z^4 - 1}{4(z^4 - z^3)}$$

La consigne de position filtrée est fournie à un comparateur 21 qui compare la consigne de position filtrée au signal de position maintenant remontée vers le calculateur grâce au bus de terrain déterministe 25, symbolisé sur la figure par un rectangle en traits épais. Le comparateur 21 génère un signal d'erreur de position $\varepsilon_\theta$ qui est fourni à un contrôleur robuste, de préférence de type H .

Il a été constaté que le problème d'instabilité pouvait être éliminé grâce à ce type de contrôle, tout en permettant l'utilisation d'un bus de terrain déterministe, y compris pour remonter le signal de vitesse de rotation vers le calculateur. A titre d'exemple, la figure 5 montre la réponse au même échelon de vitesse que celui de la figure 3. On constate que la réponse est stable et incluse dans le gabarit spécifié.

Il est connu que la synthèse d'une commande H nécessite la définition de filtres de pondération permettant de spécifier le signal de référence qui devra être reproduit, l'erreur acceptable, ainsi que la pénalité acceptable sur le signal de contrôle. La détermination de ces filtres de pondération permettant à la commande est un problème difficile et les filtres de pondération sont en général déterminés au moyen d'un processus d'essais/erreurs. Ici, et selon l'invention, les filtres de pondération sont définis au moyen de paramètres à optimiser, ces paramètres étant déterminés à l'aide d'un algorithme d'optimisation permettant un réglage automatique de la commande H .

Plus précisément, et conformément au schéma illustré à la figure 6, on établit au préalable un modèle de référence 30 de l'atterrisseur et de sa commande d'orientation. Le modèle de référence 30 est établie en relation avec les spécifications imposées par l'avionneur, et constitue une réponse idéale que l'atterrisseur et sa commande d'orientation devrait présenter à une entrée type. Bien entendu, le modèle de référence 30 doit respecter les spécifications imposées ; la réponse du modèle de référence doit, notamment s'inscrire dans un gabarit de réponse en amplitude et en phase, si un tel gabarit est spécifié. Par exemple, une réponse du modèle de référence pourrait être la réponse illustrée à la figure 5, qui constitue la réponse à un échelon de vitesse de 10 degrés par seconde.

On modélise par ailleurs un système asservi 40 qui est constitué d'un modèle de l'atterrisseur, auquel on applique l'asservissement de l'invention selon le schéma de la figure 4. Le modèle de l'atterrisseur est établi en modélisant le comportement du ou des pneumatiques, notamment leur dérapage aux grands angles. A cet effet, on tient avantageusement compte du comportement de l'aéronef lui-même, et notamment du dérapage des pneumatiques portés par les autres atterrisseurs, de l'inertie de l'aéronef...

On fournit au système asservi une entrée type, et on compare sa réponse à la réponse du modèle de référence 30 au moyen d'un comparateur 31 qui fournit une erreur . Cette erreur est alors soumise à divers traitements tels que son passage à la valeur absolue et son intégration, avant d'être fournie à un algorithme d'optimisation 32.

L'algorithme d'optimisation 32 modifie progressivement les paramètres des filtres de pondération 33. Ces paramètres sont transmis à un synthétiseur de commande 34 qui synthétise la commande H utilisée dans le système asservi 40. L'algorithme d'optimisation 32 vise à minimiser le signal d'erreur pour faire en sorte que le système asservi réponde le plus possible comme le modèle de référence 30. De préférence, l'algorithme d'optimisation est un algorithme de type génétique, qui semble dans le cas d'espèce donner de bons résultats. En particulier, les inventeurs ont constaté qu'un tel algorithme permet de trouver des paramètres optimaux des filtres de pondération pour une grande variété de contraintes.

La gestion de la commande d'orientation selon l'invention présente plusieurs avantages :

- il est possible de synthétiser une commande pour le ou les gabarits spécifiés. Les filtres de pondération sont réglés de façon automatique pour tenir compte des gabarits de réponse désirés ;
- il est possible de garder l'ensemble de l'asservissement de haut niveau (boucle de vitesse et de position) dans un calculateur séparé, disposé à l'abri dans le fuselage de l'aéronef, en ne laissant au niveau du contrôleur du moteur que l'asservissement de bas niveau (asservissement du courant à la consigne de courant fournie par le calculateur) ;
- il a été vérifié qu'une commande H de degré limité (degré 5) était suffisante pour répondre aux spécifications habituellement émises par les avionneurs concernant les performances des commandes d'orientation, tout en restant compatible avec l'utilisation d'un bus déterministe.

L'invention n'est pas limitée à ce qui vient d'être décrit, mais englobe au contraire toute variante entrant dans le cadre défini par les revendications.

En particulier, bien que l'on ait présenté ici une méthode automatique de réglage de la commande H , il est bien entendu que la commande H peut être réglée de toute autre façon.

**Revendications**

1. Procédé de gestion d'une commande d'orientation d'une partie orientable d'un atterrisseur d'aéronef, comportant la mise en oeuvre d'un asservissement pour asservir un actionneur électromécanique d'orientation à une consigne de position angulaire, dans lequel, selon l'invention, l'asservissement met en oeuvre une loi de commande de type H , des informations de position et de vitesse nécessaires à la mise en oeuvre de l'asservissement étant remontées vers un calculateur assurant cette mise en oeuvre au moyen d'un bus de terrain de type déterministe.

2. Procédé selon la revendication 1, dans lequel l'asservissement comporte un préfiltrage de la consigne de position angulaire visant à lisser celle-ci avant d'être comparée à l'information de position.

3. Procédé selon la revendication 1, dans lequel le préfiltrage est effectué au moyen d'un interpolateur discret de fonction de transfert.

4. Procédé selon la revendication 1, dans lequel l'asservissement est mis en oeuvre dans un calculateur disposé dans l'aéronef, le calculateur fournissant une consigne de courant qui est transportée vers l'actionneur électromécanique par l'intermédiaire du bus de terrain.

**5.** Procédé selon la revendication 1, dans lequel la loi de commande H est synthétisée automatiquement au moyen d'un algorithme d'optimisation déterminant des paramètres de filtres de pondération de la loi de commande de sorte que la réponse de la commande d'orientation ainsi asservie soit conforme à une réponse d'un modèle de référence (30).

Fig.1

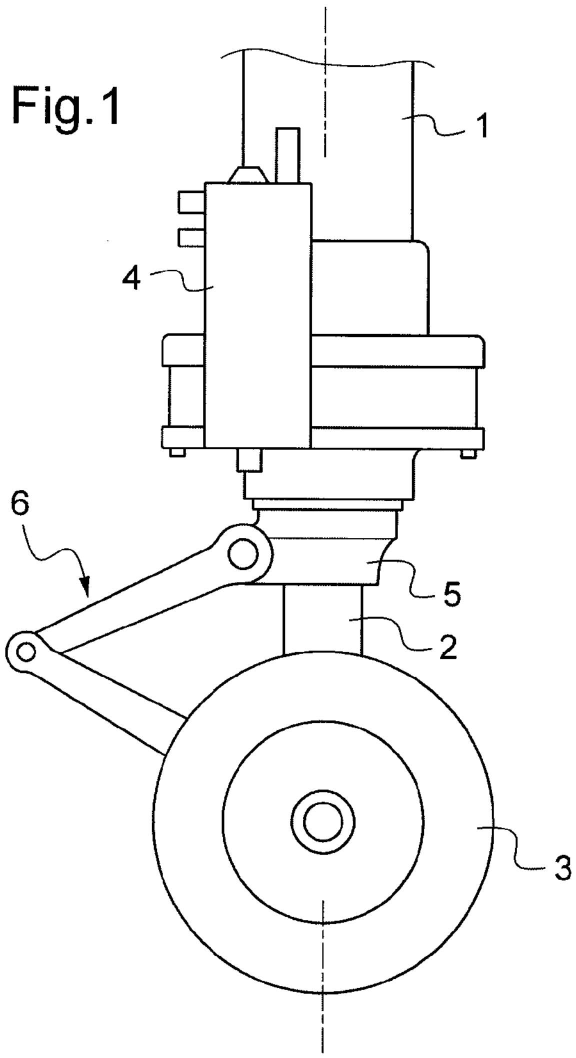
1
4
6
5
2
3

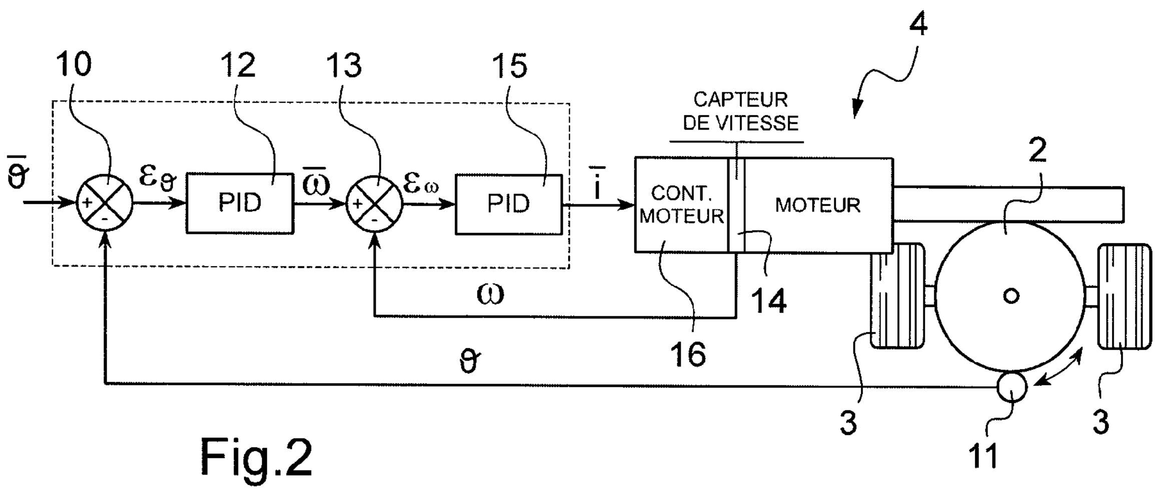
10
12
13
15
4
CAPTEUR
DE VITESSE
2
$\bar{\vartheta}$
$\varepsilon_\vartheta$
PID
$\bar{\omega}$
$\varepsilon_\omega$
PID
$\bar{i}$
CONT.
MOTEUR
MOTEUR
ω
14
16
ϑ
3
3
11

Fig.2

Fig.3

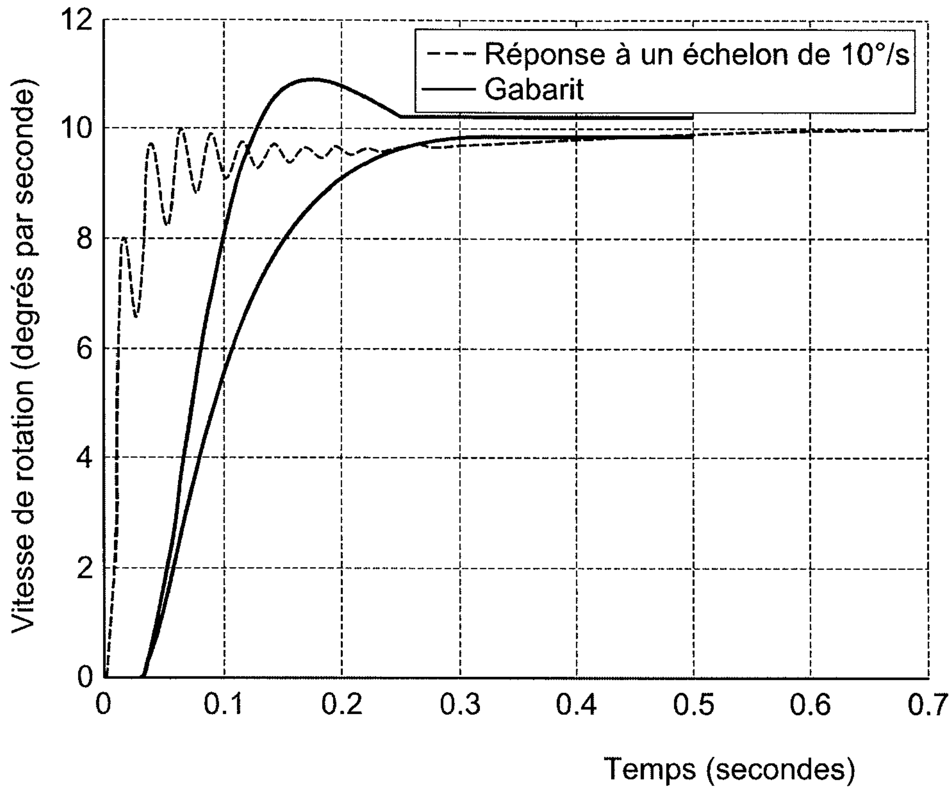
12
10
8
6
4
2
0
0
0.1
0.2
0.3
0.4
0.5
0.6
0.7
Vitesse de rotation (degrés par seconde)
Temps (secondes)
Réponse à un échelon de 10°/s
Gabarit

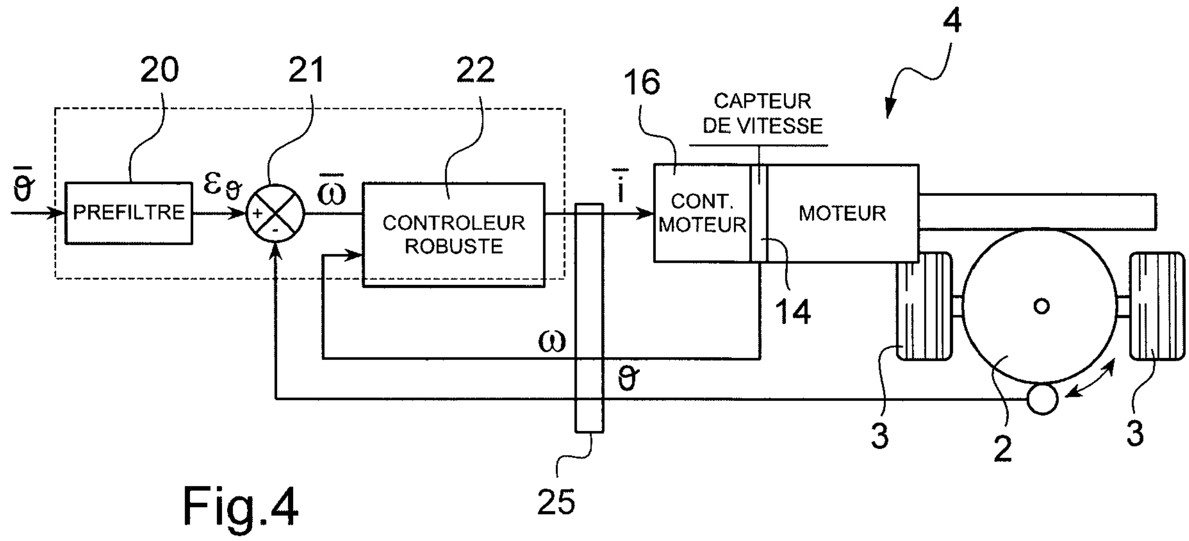
4
20
21
22
16
CAPTEUR DE VITESSE
PREFILTRE
CONTROLEUR ROBUSTE
CONT. MOTEUR
MOTEUR
ε θ
ω
i
ω
θ
14
25
3
2
3

Fig.4

Fig.5

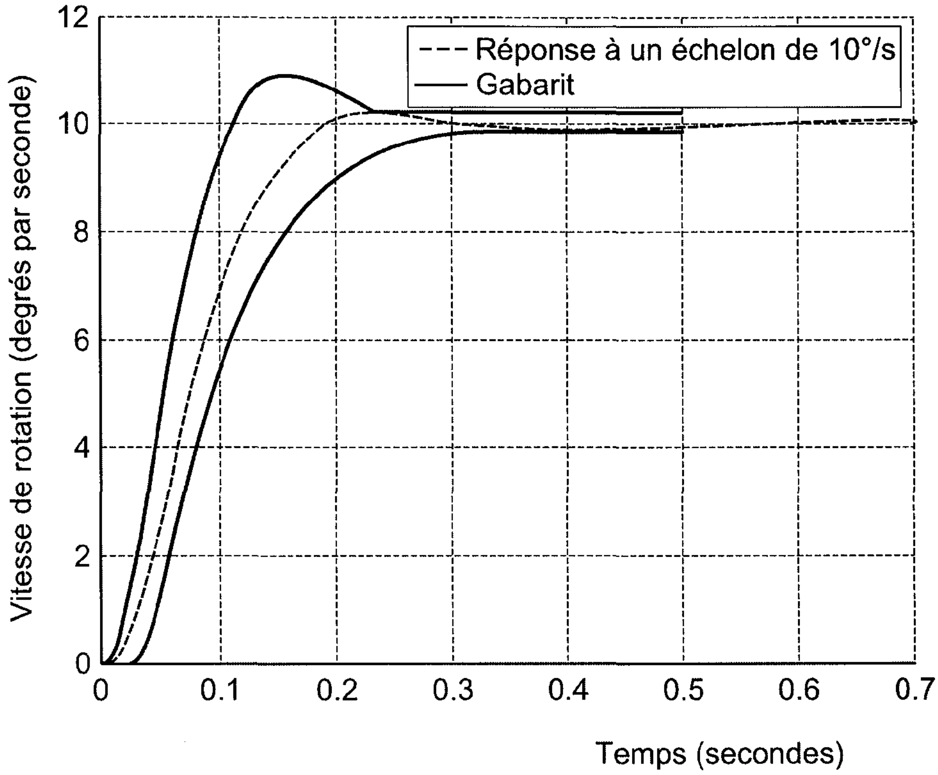
12
10
8
6
4
2
0
Vitesse de rotation (degrés par seconde)
0
0.1
0.2
0.3
0.4
0.5
0.6
0.7
Temps (secondes)
--- Réponse à un échelon de 10°/s
—— Gabarit

Fig.6

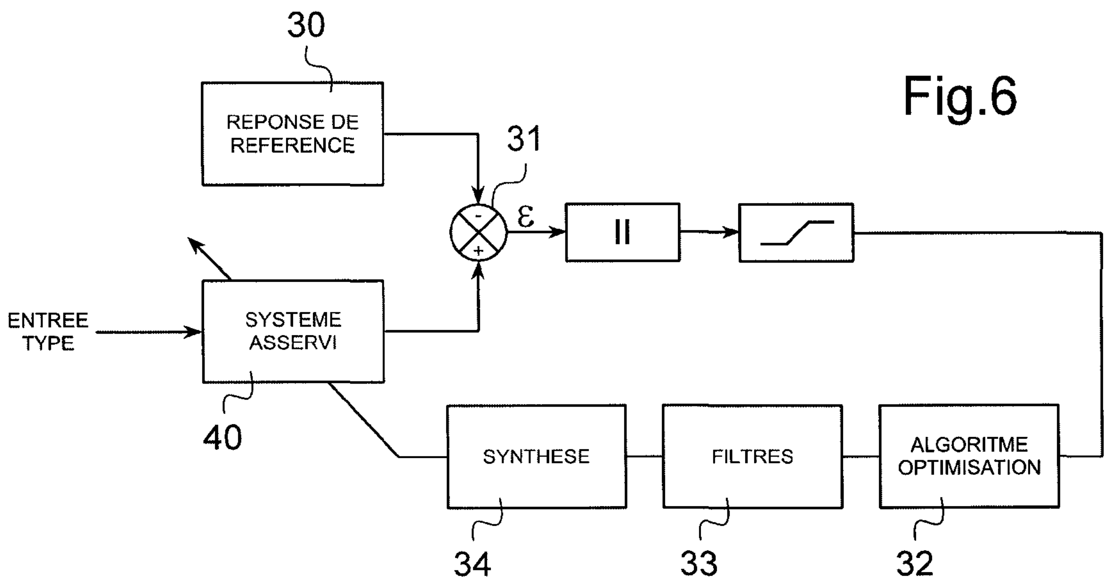
30
REPONSE DE REFERENCE
31
-
+
ε
II
ENTREE TYPE
SYSTEME ASSERVI
40
SYNTHESE
FILTRES
ALGORITME OPTIMISATION
34
33
32

Europäisches Patentamt
European Patent Office
Office européen des brevets

# RAPPORT DE RECHERCHE EUROPEENNE

Numéro de la demande
EP 10 15 0921

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 739 010 A1 (MESSIER BUGATTI [FR]) 3 janvier 2007 (2007-01-03)<br>* abrégé *<br>* colonnes 1-3 *<br>* revendication 6 *<br>* figure 2A *<br>----- | 1-5 | INV.<br>B64C25/50<br>G05B13/04 |
| Y | OLIVIER SENAME: "Robust Control: Analysis and Design"<br>INTERNET CITATION<br>28 avril 2008 (2008-04-28), pages 1-84, XP002520760<br>Extrait de l'Internet: URL:http://www.lag.ensieg.inpg.fr/sename/Robust_Control.pdf><br>[extrait le 2009-05-07]<br>* le document en entier *<br>----- | 1-5 | |
| Y | US 6 250 419 B1 (CHABAAN RAKAN C [US] ET AL) 26 juin 2001 (2001-06-26)<br>* abrégé *<br>* figure 1 *<br>* colonnes 2,3 *<br>----- | 1-5 | DOMAINES TECHNIQUES RECHERCHES (IPC)<br>B64C<br>G05B |

Le présent rapport a été établi pour toutes les revendications

| Lieu de la recherche | Date d'achèvement de la recherche | Examinateur |
|---|---|---|
| Munich | 16 avril 2010 | Dörre, Thorsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

2

EPO FORM 1503 03.82 (P04C02)

**ANNEXE AU RAPPORT DE RECHERCHE EUROPEENNE RELATIF A LA DEMANDE DE BREVET EUROPEEN NO.** EP 10 15 0921

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2010

| Document brevet cité au rapport de recherche | Date de publication | Membre(s) de la famille de brevet(s) | Date de publication |
|---|---|---|---|
| EP 1739010 A1 | 03-01-2007 | BR PI0602357 A | 21-02-2007 |
| | | CA 2550797 A1 | 27-12-2006 |
| | | CN 1891544 A | 10-01-2007 |
| | | ES 2308694 T3 | 01-12-2008 |
| | | FR 2887516 A1 | 29-12-2006 |
| | | US 2006293805 A1 | 28-12-2006 |
| US 6250419 B1 | 26-06-2001 | DE 60119598 T2 | 07-12-2006 |
| | | EP 1125824 A1 | 22-08-2001 |

EPO FORM P0460

Pour tout renseignement concernant cette annexe : voir Journal Officiel de l'Office européen des brevets, No.12/82